# EUROPEAN PATENT SPECIFICATION

(11) **EP 1 230 108 B1**
(45) Date of publication and mention of the grant of the patent: **20.06.2007**
(21) Application number: 00977116.3
(22) Date of filing: 09.11.2000
(51) Int. Cl.: B60R 21/16

(54) **VARIABLE PROFILE AIR BAG RESTRAINT**
LUFTSACK-RÜCKHALTESYSTEM MIT VERÄNDERLICHEM PROFIL
RETENUE DE COUSSIN GONFLABLE A PROFIL VARIABLE

(30) Priority: 12.11.1999 US 165330 P; 03.08.2000 US 222560 P; 28.09.2000 US 672409; 28.09.2000 US 672474
(43) Date of publication of application: 14.08.2002
(60) Divisional application: 04026651.2
(73) Proprietor: Delphi Technologies, Inc., Troy, MI 48007 (US)
(72) Inventor: Greib, Gary R., Lake Orion, MI 48362 (US); Wolanin, Michael J., Hartland, MI 48353 (US); Thomas, Scott David, Novi, MI 48902 (US); Pinsenschaum, Ryan Todd, Vandalia, OH 45377 (US); Hawthorn, Laura Adelle, Tipp City, OH 45371 (US); Taylor, Stephanie L., Springboro, OH 45066 (US); Winters, Mark Thomas, Troy, OH 45373 (US); Ryan, Shawn Gregory, Dayton, OH 45458 (US)
(74) Representative: Denton, Michael John
(86) International application number: PCT/US2000/030831
(87) International publication number: WO 2001/034436

(56) References cited:
- DE-A- 19 756 977
- DE-A- 19 813 832
- DE-A- 19 926 486
- GB-A- 2 299 550
- US-A- 6 076 854

## Description

### TECHNICAL FIELD

This invention relates to an air bag restraint system, and more particularly to an air bag restraint system which controls the expansion characteristics of an inflatable air bag cushion discharged therefrom such that the inflated profile of the discharged air bag may be varied based upon the size and/or position of the vehicle occupant to be protected and/or upon the severity of a crash event.

### BACKGROUND OF THE INVENTION

It is well known in the prior art to provide an air bag assembly including an inflatable air bag for protecting the occupants of a transportation vehicle. In an automotive vehicle such air bag assemblies are typically located within the hub of the steering wheel and in a recess in the vehicle instrument panel for protection of the vehicle occupants seated in opposing relation to such assemblies. Additional air bag assemblies may be located within the seats and/or door panels for protection of the occupants during a side-impact event. It is also known to utilize inflatable curtain-like structures for deployment from the structural pillars or roof line of the motor vehicle so as to promote restraint and protection of the vehicle occupant during a roll-over event.

Air bag assemblies typically include an inflatable cushion in fluid communication with a gas emitting inflator. Upon sensing certain predetermined vehicle conditions, such as a certain amount of vehicle deceleration, the inflator discharges a fixed amount of inflator gas thereby forcing the air bag into a deployed position. The inflator gas occupies the available volume within the air bag cushion thereby forcing the air bag cushion to expand outwardly to the extent permitted by its construction. The pressure within the air bag cushion upon deployment is proportional to the quantity of inflator gas expelled into the air bag and inversely proportional to the volume occupied by the inflator gas within the air bag. As the occupant comes into contact with the expanded air bag, the inflator gas is forced out of the air bag thereby dissipating the kinetic energy of the occupant.

In some cases, it may be desirable to provide an inflator that has varied levels or stages of inflator gas output in response to the sensing of different vehicle or occupant conditions. Thus, it is generally known in the prior art to provide multi-stage inflators that discharge inflation gas at variable levels depending upon the conditions present during deployment. One such prior art air bag assembly presenting the features of the preamble of claim 1 is disclosed in GB 2,299,550. This air bag is inflatable to a first extent when restricted by a strap and to a second, greater extent when the strap is severed. In the second state, there is no control over the geometry of the air bag, which is completely un-tethered. However, these multi-stage inflators are more complex than typical inflators. Moreover, the use of such multi-stage inflators provides control over only the amount of inflator gas, which is discharged and does not provide control over the expanded geometry of the inflated air bag cushion. That is, so long as the air bag has a fixed expanded geometry, the inflator gas will tend to fill the available capacity and the expanded configuration of the air bag will be generally the same even if the quantity of inflator gas is varied although the pressure within the air bag will tend to differ appreciably.

In order to provide an additional degree of freedom in the control of air bag performance, it has been suggested to utilise air bag cushions which incorporate seams within the air bag to control the expanded geometry of the inflated air bag wherein the seams separate upon the introduction of sufficient force across the seams thereby freeing the air bag cushion from the restraint imposed by the seams at lower pressures. In order for such break-away seams to provide controlled expansion, the application of such seams must be performed with substantial precision such that seam separation will occur in a highly reproducible and predictable manner. As will be appreciated, due to the large number of variables involved in the introduction and separation of such break-away seams, such requisite precision and reproducibility may be difficult to achieve. According to the present invention, there is provided an air bag assembly as claimed in claim 1.

The present invention provides advantages and alternatives over the prior art by providing an assembly to vary the deployed profile of an air bag cushion which may be inflated to a controlled variable level using either a single stage or multi-stage inflator and which may be expanded prefentially in the depth direction towards the occupant to be protected without the need to rely exclusively on break-away seams. The present invention thereby provides an air bag cushion which may be deployed to a relatively shallow profile during a crash event of low severity or for the protection of a small stature occupant or an occupant seated in close proximity to the air bag and which may also be deployed to a profile of substantially increased depth during a severe crash event or for protection of a larger occupant or an occupant seated further away from the location of the air bag deployment. The present invention further provides a mechanism for simply and effectively controlling both the profile of the deployed air bag cushion and the quantity of inflation gas released into the air bag cushion.

The invention provides an assembly to deploy an air bag cushion to a controlled geometry of a depth which is desired in view of the position of the occupant to be protected such that an air bag of substantial depth is available to protect occupants such as large stature persons who are seated further away from the location of cushion deployment, while a smaller air bag volume of diminished depth is available to protect occupants such as smaller stature persons seated closer to the location of cushion deployment. The deployed profile may also be adjusted based upon the severity of the crash event giving rise to the deployment.

The present invention further provides an effective mechanical acuation mechanism to adjust the deployment characteristics of the air bag cusion which actuation mechanism is not dependent upon a particular cushion construction technique and is activated based upon measured parameters of the crash event and the occupants to be protected.

Furthermore, the actuation mechanism to control the deployed profile of the air bag cushion may be operated either independently or in conjunction with a device to adjust the level of inflator gas which enters the air bag cushion thereby providing additional versatility of operation. Conjunctive operation may be carried out utilizing a single common initiator such as a pyrotechnic squib. Thus, it is a potentially preferred feature of the present invention that the air bag assembly may incorporate as few as two initiators (i.e. one initiator to activate the inflator and one initiator to initiate the actuation mechanism to control the deployment profile of the air bag and the level of inflation gas which enters the air bag).

In addition, the actuation mechanism to control the deployed profile and level of inflation gas may be mounted externally on the inflator or the supporting housing thereby avoiding any need to substantially modify the shape or construction of the inflator housing.

In addition, the actuation mechanism and variable profile air bag of the present invention may be used in conjunction with traditional single stage inflators without requiring internal modifications to such inflators.

These advantages are accomplished by an air bag assembly according to claim 1. Based upon the severity of the crash event and/or the size and/or the position of the occupant to be protected, an actuation mechanism which releases the tethers from the anchor assembly may be either activated or may remain deactivated to yield a deployed air bag cushion of desired volume and geometric configuration. The volume of inflation gas entering the air bag cushion may be adjusted simultaneously with the profile of the air bag cushion.

The actuation mechanism will remain deactivated in the event that the crash event is of low severity and/or the occupant to be protected is of small stature and/or the occupant to be protected is seated in a position close to the location of air bag deployment, thereby resulting in a constrained final expanded geometry. In the event that the crash event is of sufficient severity and/or the occupant to be protected is of larger stature and/or the occupant to be protected is seated further away from the location of air bag deployment, the actuation mechanism may be activated to at least partially eliminate depth restraint thereby permitting the air bag to expand to a greater volume and depth so as to provide additional cushioning for such an occupant.

Thus, it will be appreciated that variable expanded geometries may be achieved in the inflated air bag with such geometries being controllable and adjustable based upon the severity of the crash event and/or the physical parameters of the occupant to be protected. Such control is preferably achieved through use of one or more mechanical actuation mechanisms which are either activated or deactivated to effect control of the inflatable air bags by either holding or releasing tethering restraint elements from an anchoring location remote from the air bag cushion.

Since the activation or deactivation of the actuation mechanism is carried out in conjunction with deployment of the air bag cushion, the necessary geometric character may be achieved for a given occupant as may be present within the vehicle at the time of deployment. Thus, the variable air bag and actuation mechanism according to the present invention offers substantial versatility in the protection of large numbers of diverse occupants including very small and very large occupants experiencing different levels of crash severity. It will also be appreciated that this system provides a simple, cost effective and highly reproducible system for controlling the volume of deployed air bag cushions even when using a traditional single stage inflator.

### BRIEF DESCRIPTION OF THE DRAWINGS

The present invention will now be described by way of example only, with reference to the accompanying drawings which constitute a part of the specification herein and in which:
FIG. 1 is a cut-away view of a vehicle interior showing an air bag cushion in a stored undeployed state in opposing relation to a vehicle occupant;
FIG. 2 is a cut-away view of an air bag module including an inflator and a first embodiment of an actuation mechanism for controlling the expansion of a variable profile air bag as well as controlling the quantity of inflator gas which enters the variable profile air bag;
FIG. 3 is a detailed view of an anchoring connection as may be used to hold profile constraining tethering elements in place at an anchoring location;
FIG. 4A is an illustrative profile view of a variable profile air bag according to the present invention in a deployed state in a reduced depth configuration;
FIG. 4B is a view similar to FIG. 4A showing a variable profile air bag according to the present invention in a deployed state in an expanded configuration of enhanced depth;
FIG. 5 is a view similar to FIG. 2 illustrating an alternative configuration of an actuation mechanism for controlling the expansion of a variable profile air bag as well as controlling the quantity of inflator gas which enters the variable profile air bag;
FIG. 6 is a view taken along line 6-6 in FIG.5;
FIG. 7 is a view taken along line 7-7 in FIG.6 prior to deployment; and
FIG. 8 is a view similar to FIG. 7, wherein tethering elements have been released from a shortened anchored position upon deployment of an air bag cushion.
FIG. 9 is a cut-away view of an air bag module including an inflator and an alternative mechanism for controlling the expansion of a variable profile air bag as well as controlling the quantity of inflator gas which enters the variable profile air bag;
FIG. 10A illustrates an arrangement of profile restricting tethers as may be utilized in a variable profile air bag wherein the air bag is restrained to a diminished profile;
FIG. 10B is a view similar to FIG. 10A, wherein the air bag is in an expanded profile configuration;
FIG. 11A illustrates an arrangement of profile restricting tethers as may be utilized in a variable profile air bag, wherein the air bag is restrained to a diminished profile; and
FIG. 11B is a view similar to FIG. 11A, wherein the air bag is in an expanded profile configuration.

While the invention has been illustrated and generally described above and will hereinafter be described in connection with certain potentially preferred embodiments, it is to be understood that in no event is the invention to be limited to such illustrated and described embodiments.

### DESCRIPTION OF THE PREFERRED EMBODIMENTS

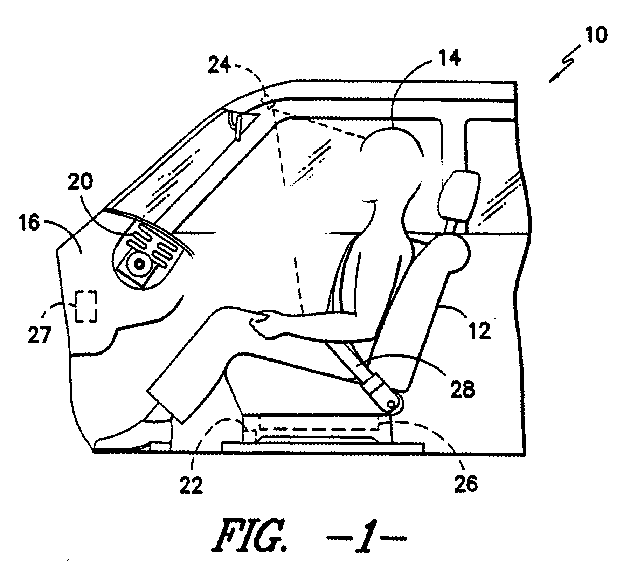

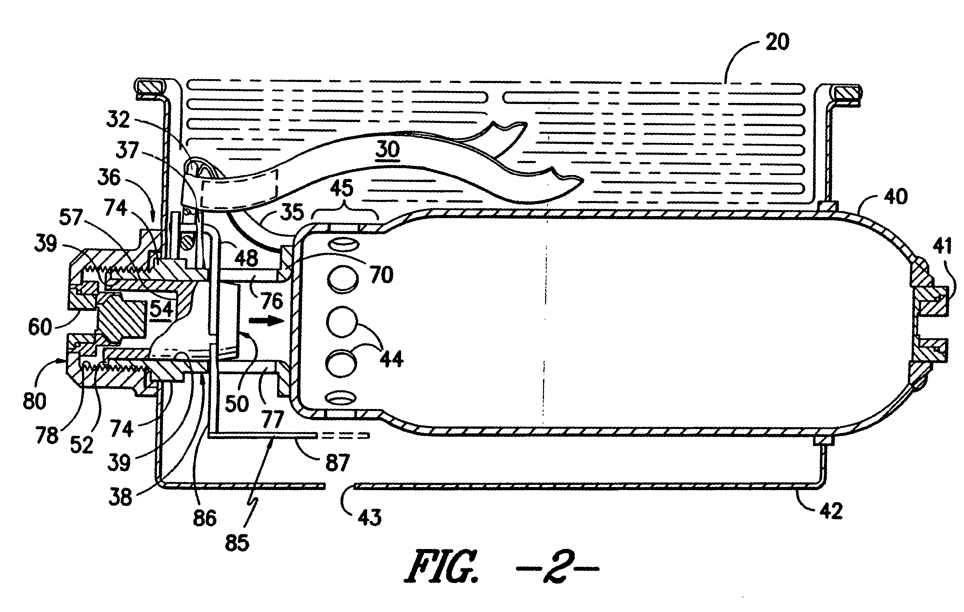

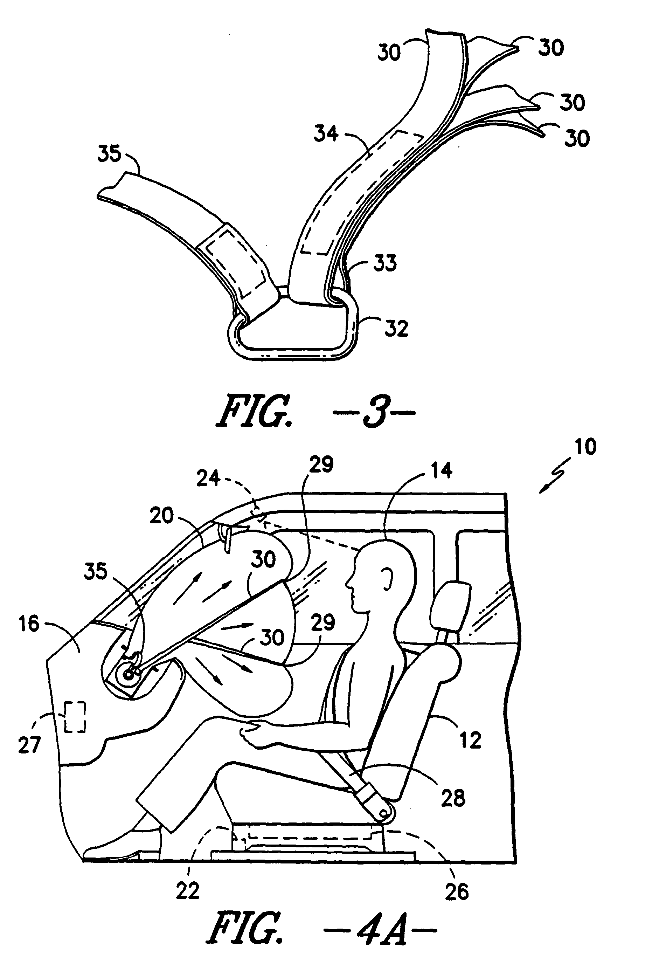

Turning now to the drawings, wherein to the extent possible like reference numerals are utilized to designate like components throughout the various views, in FIG. 1 it is seen that a vehicle 10 may include a seating structure 12 which supports an occupant 14 in generally opposing relation to an instrument panel 16. An inflatable air bag 20 may be housed within the instrument panel 16 for outward deployment towards the occupant 14 in the event of a collision.

While the air bag 20 is illustrated for descriptive purposes in relation to a vehicle passenger, it is to be understood that the present invention is in no way intended to be limited to a passenger side configuration. On the contrary, it is contemplated that the present invention may have equal applicability to air bag deployment in opposing relation to the operator (not shown) of the vehicle from the steering column (not shown) as well as in relation to air bags deployed from other regions within the vehicle interior including, by way of example only, side-impact air bags and inflatable curtain structures.

It is contemplated that the vehicle interior will preferably include a seat position sensor 22 as the primary means of detecting the position of the occupant 14 relative to the instrument panel 16. It is further contemplated that the vehicle 10 may include additional position sensors such as an optical scanner 24 or the like to measure both the volume and position of the occupant to be protected. It is contemplated that the interior of the vehicle 10 may also be provided with a scale 26 disposed within the seating structure 12 so as to provide additional data regarding the load to which the inflatable air bag 20 may be subjected. The seating structure 12 may also be provided with sensing elements to measure the degree to which the seating structure 12 is reclined. The vehicle 10 may also be provided with sensors to determine and communicate whether or not the occupant is utilizing the recommended seat belt structures 28. A deceleration meter 27 as will be well known to those of skill in the art may be utilized to determine the relative severity of any crash event which may give rise to deployment of the inflatable air bag 20. The data collected may be utilized to determine desirable expanded profile characteristics for the air bag 20 according to the present invention.

It is believed that in some instances persons of small stature may benefit if the air bag 20 according to the present invention is of a reduced profile upon deployment due to the fact that such occupants have a lower body mass and are generally seated in closer proximity to the instrument panel 16. Such a reduced profile may also be desirable in crash events of relatively low severity. Conversely, it is believed that in some instances occupants of larger stature may benefit from a deeper profile air bag 20 due to their enhanced mass and propensity to be positioned further from the location of air bag deployment. An enhanced profile air bag may also be beneficial in some very severe crash events. In the event that a person of smaller stature is seated at a remote distance from the location of air bag discharge, it may be desirable for the air bag 20 to assume an extended profile so as to span the distance between the occupant and the location of discharge. Likewise, a person of larger stature who is seated in unusually close proximity to the location of air bag discharge may benefit from a shallow inflated profile.

The determination of the potentially desirable profile character of the air bag 20 for various occupants seated in various positions may be determined based upon event simulations utilizing so-called "crash dummies" of various sizes in various positions experiencing different crash severities within the vehicle 10. Such size, position and crash severity parameters may be stored along with corresponding desired gas emission characteristics within an electronically accessible storage registry for access by a processing unit such as an on-board computer during a collision event. During such an event, the relative severity of the collision may be measured by the deceleration meter 27 while the position of the occupant 14 as measured by the seat position sensor 22 as well as data from any other sensors as may be utilized will be correlated to corresponding values as archived within the storage registry thereby providing data on the desired profile characteristics of the air bag 20 for the occupant 14 based upon the severity of the collision event and upon his or her orientation within the interior of the vehicle 10 at the time the event takes place.

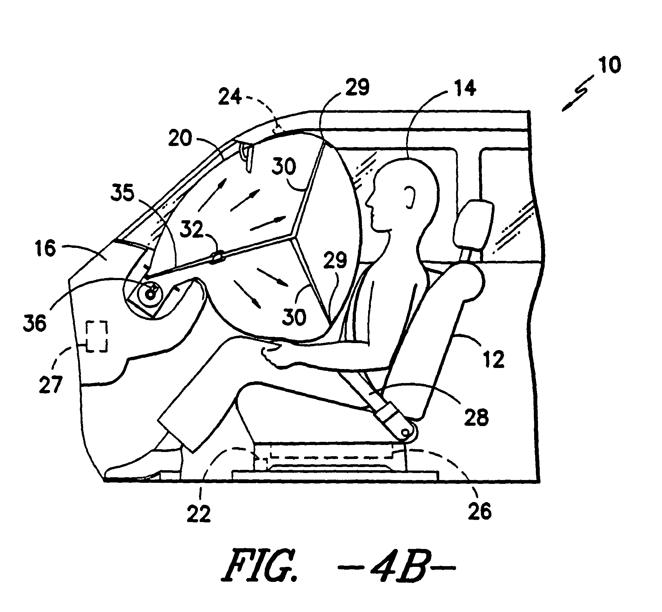

According to the potentially preferred form of the invention, the air bag 20 will have a first expanded profile and at least a second expanded profile which is characterized by less depth and lower volume than the first expanded profile. Such diminished profile and volumetric capacity is preferably achieved through the use of tethered restraints 30 as illustrated in FIGS. 2, 3, 4A and 4B. The degree of restraint applied by the tethered restraints 30 is relaxed either completely or to some secondary level when such tethered restraints 30 are released from an anchoring point at a position remote from the air bag 20 in the manner to be described further hereinafter.

The release or retention of the tethered restraints 30 is preferably carried out at the time of inflation of the air bag 20 based upon the preferred profile character of the air bag 20 in view of the measured collision severity and/or physical character and/or position of the occupant 14. That is, if the collision severity, physical character and orientation of the occupant 14 are such that previously collected data indicates that a deep profile and corresponding larger volume are desired for the inflatable air bag 20, then the tethered restraints 30 are released from their anchored position at the time of inflation thereby permitting the inflatable air bag 20 to assume an expanded enhanced profile. Conversely, in the event that the collision severity, physical character and orientation of the occupant 14 are such that the inflatable air bag 20 is preferably of a more shallow profile and lower volume, then the tethered restraints 30 will remain anchored during deployment of the inflatable air bag 20 so as to restrain the final profile thereof.

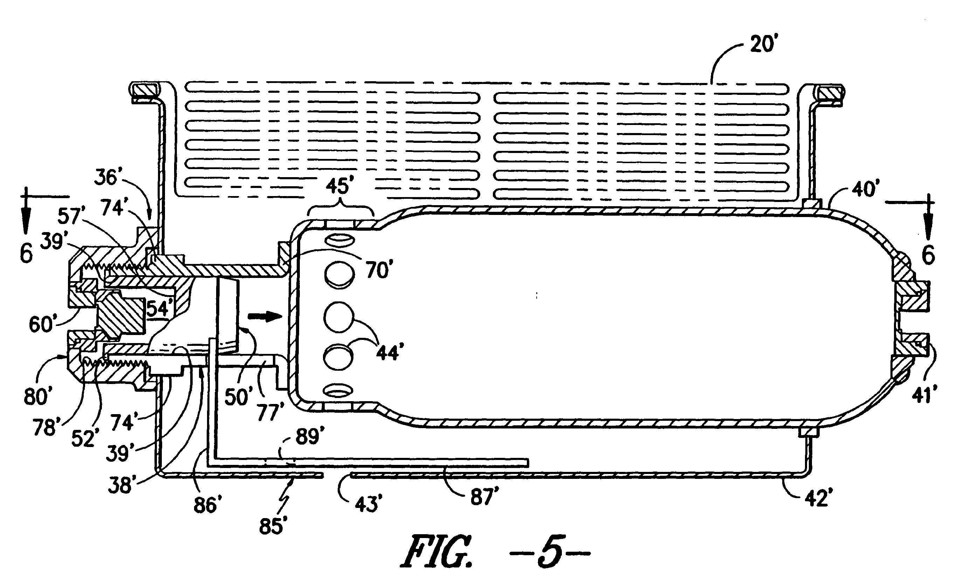

Looking to FIGS 2 and 3, the tethered restraints 30 may be formed into a loop 33 which is optionally held within a ring element 32. As shown, in the event that a ring element is utilized, the attachment between the ring element 32 and the tethered restraints 30 may be attained by passing the various tethered restraints 30 collectively through the opening at the interior of the ring element 32 so as to form the loop 33 which can slide along the length of the ring element 32. The configuration of the loop 33 is thereafter maintained by attaching the tethered restraints 30 to one another along a length remote from the loop 33. The joiner between the tethered restraints 30 may be formed by any suitable joining technique as may be known to those of skill in the art including, by way of example only, the application of a sewn seam 34 as may be applied using industrial sewing equipment. Other modes of attachment may include adhesive bonding, ultrasonic welding, RF welding, and combinations thereof.

The material forming the tethered restraints 30 is preferably a material of pliable nature such as a woven or knitted textile of construction resistant to substantial elongation upon the application of tensile forces. A woven structure of nylon yarns may be preferred.

As shown, a mooring strap 35 is also preferably looped in fixed relation around the ring element 32. The distal end of the anchoring strap is attached in fixed relation to a secure point of attachment either on the air bag 20 or external thereto thereby acting as a mooring line for the ring element 32 and attached tethered restraints 30 during deployment of the air bag 20.

In the event that a ring element 32 is utilized, it is preferably formed from a smooth surface material of high strength such as metal or the like. Such materials have the ability to withstand substantial loading without undergoing plastic deformation. As will be discussed further hereinafter, the ring element 32 may accept a moveable retaining member in sliding relation through its opening such that the withdrawal of the retaining member releases the ring element 32 and tethered restraints 30 attached thereto. In the event that a ring element 32 is not utilized, it is contemplated that this function may be carried out by the loop 33 which may likewise accept a retaining member therein. Thus, it is to be appreciated that the use of the ring element 32 is in no way considered to be critical to the performance of the present invention.

As best seen in FIG. 2, according to one embodiment of the present invention, the ring element 32 is operatively connected to an actuation mechanism 36 via a bracket assembly 37. In particular, the ring element 32 is seated between upstanding walls of the bracket assembly 37. In turn, the bracket assembly 37 may be welded or otherwise attached to a support structure 38 connected to a gas emitting inflator 40 which is activated by an initiator 41 such as a pyrotechnic squib or other suitable device as will be well known to those of skill in the art.

The gas emitting inflator 40 is stored within a housing 42 which may include one or more vent openings 43 for transmission of inflator gas outwardly from the module away from the air bag 20. As illustrated, such vent openings are normally in fluid communication with gas discharge ports 44 generally surrounding the diffuser portion 45 of the inflator 40. As will be appreciated, while the support structure 38 of the actuation mechanism 36 is illustrated as being connected to the gas emitting inflator 40, it is likewise contemplated that any number of other arrangements may also be utilized. By way of example only, it is contemplated that the actuation mechanism 36 may be located remote from the inflator 40 and attached directly to the housing 42.

According to the illustrated embodiment, one leg of a substantially right angled pin element 48 may be passed through appropriately sized apertures (not shown) within the walls of the bracket assembly as well as through the open center of the ring element 32. As will be appreciated, in such an arrangement the ring element 32 will be anchored in place within the bracket assembly 37 thereby preventing the withdrawal of the ring element 32 due to the obstruction created by the pin element 48. The tethered restraints 30 which are fixedly attached to the ring element 32 will likewise be anchored to the bracket assembly 37. The reach of the tethered restraints 30 is thereby limited to the distance between the bracket assembly and the distal ends of the tethered restraints 30. Accordingly, when such distal ends of the tethered restraints 30 are fixedly attached to portions of the air bag 20, the expanded profile of the air bag 20 is limited due to the anchored relation between the ring element 32 and the pin element 48.

As illustrated, the leg of the pin element 48 which does not extend through the bracket assembly 37 preferably extends into a plunger element 50 which is held within the interior of the support structure 38 at the end of the inflator 40. The support structure 38 preferably has a substantially hollow tubular shape including interior walls 39 defining an axial opening into which the plunger element 50 and an initiator device 60 such as a pyrotechnic squib may be inserted during assembly.

The support structure 38 preferably includes a first support end 70 of a substantially flanged configuration that is secured directly to the head portion of the inflator 40. The first support end 70 may be secured to the inflator 40 by any suitable method, such as welding. The support structure 38 also preferably includes a spacing shoulder 74 which is sized larger than an end opening in the housing 42 such that the support structure 38 is limited from going through the end opening within the housing 42 and is properly positioned during assembly. The spacing shoulder 74 is preferably integrally formed with the support structure 38 such as by machining or molding but may also be provided as a separate piece attached to or slipped over the support structure 38. In the installed condition, the spacing shoulder 74 preferably abuts an end wall of the housing 42.

According to the illustrated embodiment, the support structure 38 is externally attached to the inflator 40 and may be provided as an assembly with the inflator 40 or may alternatively be integrally formed with the inflator 40. The support structure 38 preferably includes a first guide channel 76 which extends longitudinally along at least a portion of the distance between the spacing shoulder 74 and the first support end 70 of the support structure 38 such that the downwardly extending leg of the pin element 48 which does not engage the ring element 32 or loop 33 passes through the first guide channel 76 and into the plunger element 50 as shown. The support structure 38 further preferably includes a threaded end portion 78 which extends past the spacing shoulder 74 through the end opening of the housing 42 for mating with a cap nut 80 to secure the inflator 40 and the variable volume actuation mechanism 36 to the housing 42.

The plunger element 50 is preferably integrally formed from a plastic material and has a generally cylindrical shape. The plunger element 50 is preferably seated within the interior walls 39 of the support structure 38 and has a diameter which is slightly smaller than the axial opening between the interior walls 39 such that the plunger 50 is slidable relative to the interior walls 39. The plunger 50 includes at least a first radial plunger hole which is sized for the close receipt of the downwardly extending leg of the pin element 48. The plunger element 50 may also include a second radial plunger hole for the close receipt of a moveable vent blocking device 85 the operation of which will be described further hereinafter. However, it is also contemplated that the variable profile actuation mechanism 36 or such other mechanism as may be used to regulate the expanded configuration of the air bag 20 may be operated without such a moveable vent blocking element 85 if desired. The elements received within the linear plunger element 50 may be secured in place by snap-fitted attachment, although it will be appreciated that other methods of attachment including by way of example only crimping, fastening, or adhesion may also be utilized to obtain secure attachment.

As shown, the plunger element 50 preferably includes a shear feature 52 which is illustrated as a flange located at the end of the plunger element 50. The shear feature 52 is preferably integrally formed with the plunger element 50, but may also be a separate piece attached to the plunger element 50. The shear feature 52 is sized larger than the axial opening within the support structure 38 such that the sheer feature 52 engages the support structure 38 during insertion to limit the insertion of the plunger element 50 into the support structure 38.

The plunger element 50 preferably includes an axial plunger bore 54 in which an initiator device 60 such as a pyrotechnic squib, pneumatic actuator or the like is seated prior to activation. The initiator device 60 preferably is activated upon the receipt of a signal from a control device such as an on-board computer (not shown) based upon inputs from the seat position sensor 22, optical scanner 24, deceleration meter 27 and any other sensor as may be used to measure the condition of the occupant including the forces to which the occupant is being subjected during the event. Upon activation, the initiator device 60 produces a pressure wave that presses against a plunger reaction surface 57. The application of such force causes the shear feature 52 to break off and permits the plunger element 50 to slide within the support structure 38 until engaging the head 49 of the inflator 40 which acts as a stop surface.

In the event that a vent blocking element 85 is to be utilized in conjunction with the variable profile actuation mechanism 36, the vent blocking element 85 will preferably include an upwardly projecting arm portion 86 which may be snap fittedly attached in the plunger element 50. The vent blocking 85 will also preferably include a slide portion 87 extending at generally a right angle to the arm portion 86. Thus, in illustrated embodiment wherein the vent blocking element 85 is to be utilized, the pin element 48 and the vent blocking element 85 are arranged in a substantially "Z" shaped profile.

The slide portion 87 preferably has a generally curved shape such that allows the insertion into the housing 42 through round end wall openings during the assembly process. The vent blocking element 85 is preferably moveable within a second guide channel 77 within the support structure 38 so as to close an inflator vent opening 43 upon activation of the initiator device 60. In FIG. 2, the slide portion 87 is shown in a first position in solid lines in which the inflator vent opening 43 is open thereby lowering the amount of gas available for inflation of the air bag 20 and is illustrated in phantom lines in a second position in which the slide portion 87 is blocking the inflator vent opening 43 within the housing 42 thereby directing a larger quantity of available inflator gas into the air bag 20.

According to the illustrated embodiment, prior to activation of the inflator 40 by activation of the inflator initiator 41, the air bag 20 is stored in a folded condition atop the inflator 40. Also, prior to activation of the inflator 40, the pin element 48 as well as the optional blocking element 85 are held within the support structure 38 in a first position by the shear feature 52 such that the pin element 48 anchors the ring element 32 attached to the tethered restraints 30 in place within the bracket assembly 37. In addition, the slide portion 87 of the blocking element 85 is misaligned with the inflator vent opening 43 such that the inflator vent opening 43 is open thereby promoting the egress of inflator gas outwardly from the housing 42.

Upon sensing predetermined vehicle and occupant conditions, a signal is sent to the inflator initiator 41 thereby activating the inflator 40. Based upon the measurement of the collision severity and/or the position and/or physical character of the occupant 14, a signal is also sent to the initiator device 60 advising the initiator device 60 as to whether the first position is to be maintained or whether the initiator device 60 is to be activated at a predetermined time during activation of the inflator 40 to disengage the pin element 48 thereby releasing the tether elements from the bracket assembly 37. According to the potentially preferred arrangement, the initiator device 60 will be activated when conditions indicate that an air bag of deeper profile and larger volume is required and will remain in a deactivated state when conditions indicate that an air bag of more shallow profile and lower volume is desirable.

As previously indicated, upon activation, the initiator device 60 produces a pressure wave which presses against the reaction surface 57 of the plunger element 50 and quickly forces the plunger element 50 towards the head portion of the inflator 40. This movement carries the pin element 48 as well as any optional vent blocking element 85 within the plunger element 50 from the first position illustrated in Fig. 2 to a second position wherein the plunger element 50 is in contact with the head portion of the inflator 40. Such movement rapidly extracts the pin element 48 from the ring element 32 thereby releasing the tethered restrains 30 from their anchoring relation to the bracket assembly 37. Simultaneously, the vent blocking element 85 covers the vent opening 43 thereby increasing the quantity of inflation gas available to inflate the air bag cushion 20.

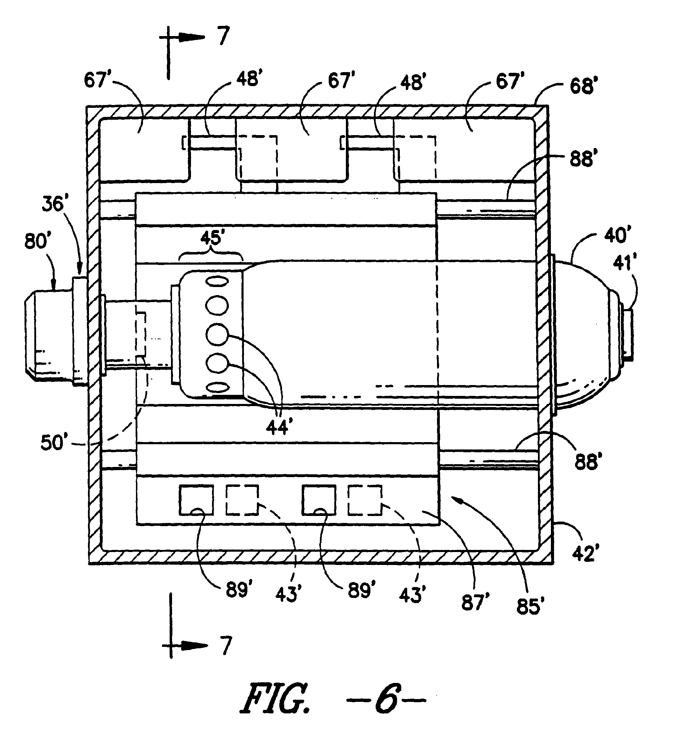

From the foregoing discussion, it is to be appreciated that there are several basic permutations of expansion characteristics which may be achieved through use of the variable profile air bag 20 and corresponding actuation mechanism according to the present invention. Specifically, when the actuation mechanism remains in a deactivated position substantially as shown in solid lines in FIG. 2, the expansion of the air bag 20 will be limited in the depth dimension by the available length of the tethered restraints 30 between the anchoring pin element 48 and the points of connection 29 between the tethered restraints 30 and the surface of the inflatable air bag 20 as shown in FIG. 4A. As will be appreciated, in such a constrained configuration the cushion may inflate to an increased length and width as the available material expands in the dimensions which are not restricted.

In the event that the actuation mechanism 36 associated with the variable profile air bag 20 is activated, the pin element 48 releases the ring element 32 from its anchored location between the walls of the bracket assembly 37. Such release provides for the effective increase in the length of the tethered restraints 30 thereby permitting the air bag 20 to assume a substantially extended profile and increased volume as illustrated in FIG. 4B. In the illustrated embodiment, when the ring element 32 is released from the bracket assembly 37 the ring element 32 and tethered restraints 30 are nonetheless moored to a stable point of connection on the housing 42 by the mooring strap 35. It has been found that maintaining such a stable connective relationship may be used to provide a continued degree of control over the final expanded profile of the air bag 20. More particularly, it has been found that by maintaining some degree of tethering the available increased volume of the air bag 20 may be used to selectively increase the depth dimension of the final expanded profile far more than would naturally occur if tethering restraint is eliminated entirely. Thus, a generally deep elongated profile as shown may be obtained without requiring a substantial increase in volumetric capacity. By way of example only and not limitation, it is contemplated that the actual final volumetric increase in the air bag cushion 20 will be in the range of about 25% or less and may be in the range of about 15% or less.

As will be appreciated, the incorporation of the vent blocking element 85 for operation in conjunction with the variable volume actuation mechanism 36 permits the discharge of an enhanced quantity of inflator gas into the air bag 20 in the larger expanded condition of FIG. 4B without the need for any additional initiating device. It is to be appreciated that while only a single actuation mechanism has been illustrated and described in relation to both the expanded profile of the air bag 20 and the activation of the vent blocking element 85, it is likewise contemplated that separate actuation mechanisms may be utilized to adjust the profile of the air bag 20 and to actuate any vent blocking element 85 or other inflator gas control as may be utilized. It is further contemplated that more than one actuation device may be utilized to provide a range of different profile characteristics to the inflatable air bag 20.

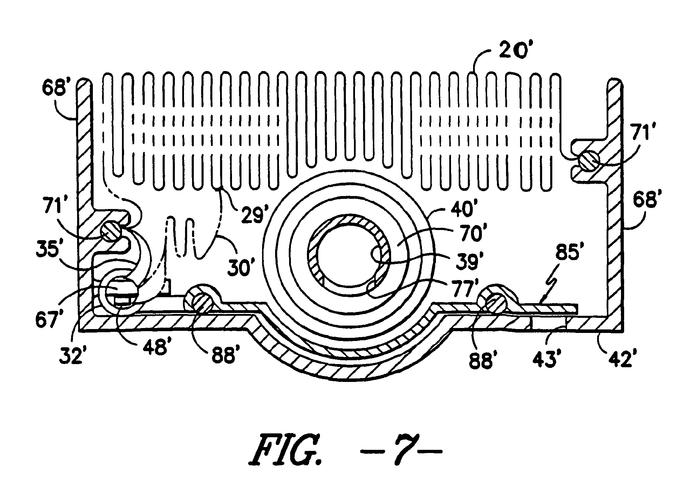

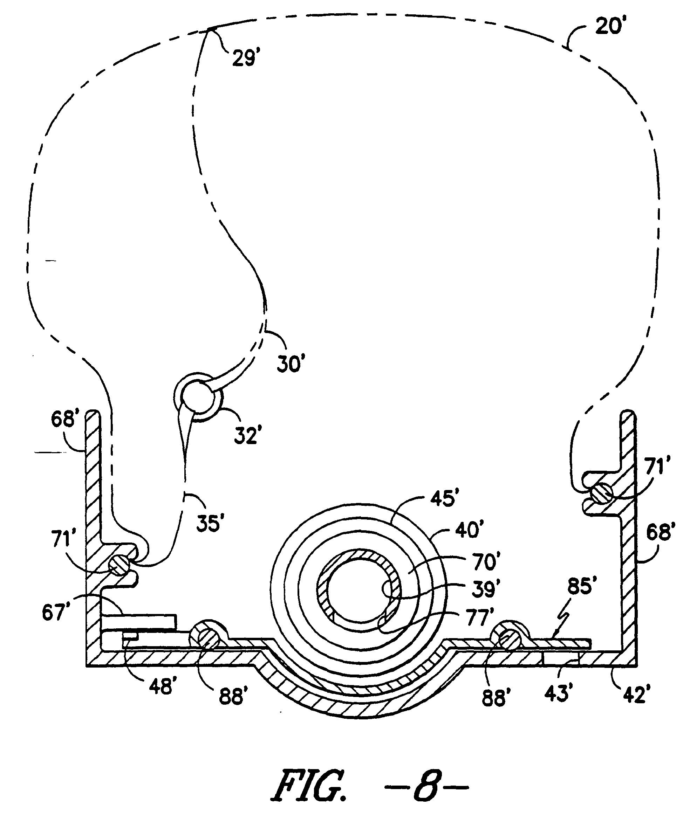

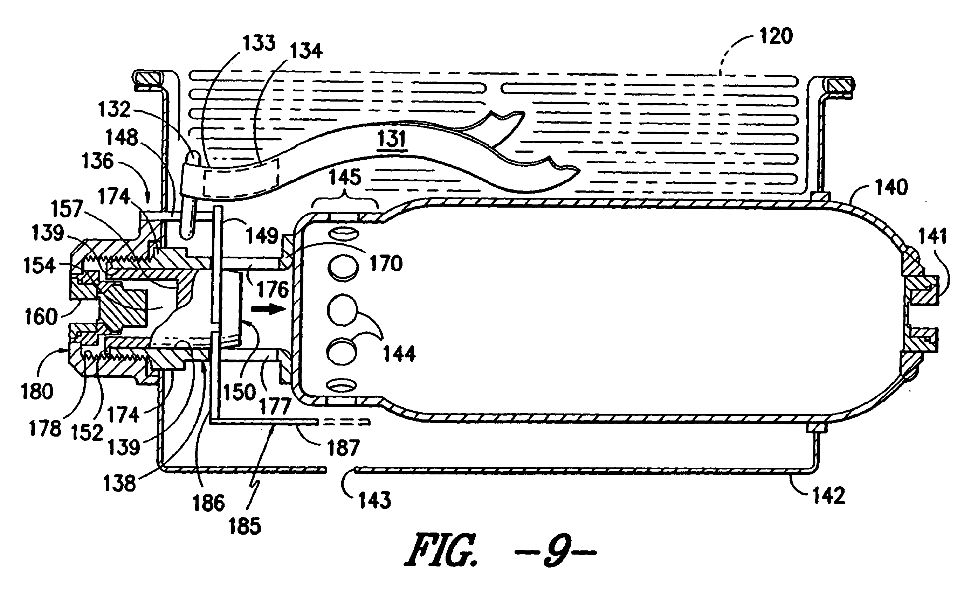

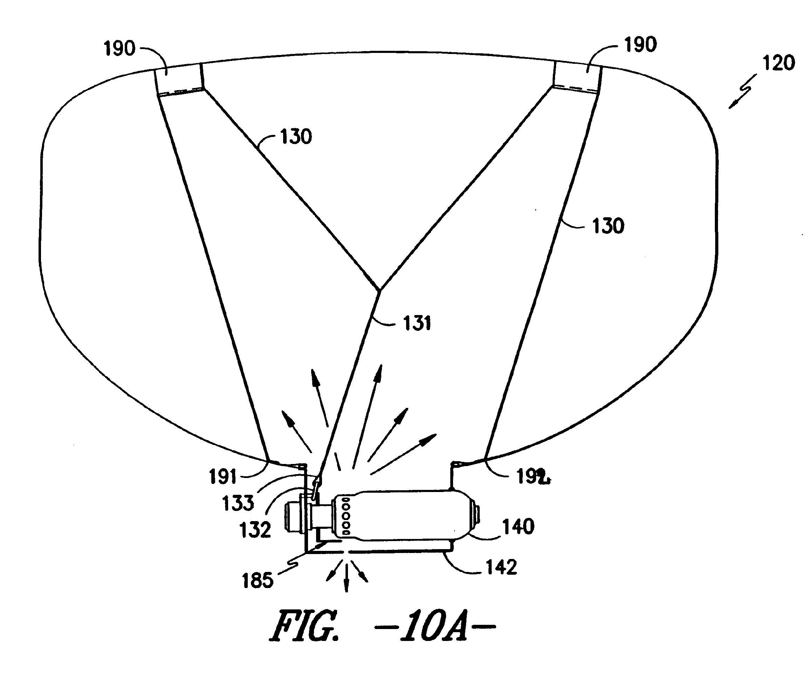

It will be understood that a person skilled in the art may make modifications to the embodiment as described above. Turning now to FIGS. 5-8 an alternative embodiment of the present invention is provided wherein like elements to those previously described are designated by like reference numerals with a prime. As best illustrated through reference to FIGS 5 - 7, in this embodiment the slide portion 87' of the vent blocking element 85' is disposed in a cupping relationship in the region generally below the inflator 40'. The slide portion 87' preferably includes one or more apertures 89' which are disposed so as to move into and out of covering relation to vent openings 43' within the housing 42'. The apertures 89' serve to adjust the effective venting area available for transferring inflation gas away from the air bag 20' as the air bag undergoes loading. As illustrated, upon linear movement of the slide portion 87' the apertures 89' may be moved relative to the vent openings 43' so as to either increase or decrease the effective area of the vent openings 43' so as to control the venting characteristics of the air bag 20'.

As best seen in FIGS. 6 and 7, also carried on the slide portion 87' of the vent blocking element 85' are one or more rod-like tether attachment retaining elements 48' which are carried within a segmented sleeve 67' extending along a side wall 68' of the housing 42' in the region generally adjacent to the length of the inflator 40'. As will be appreciated, the breaks in the segmented sleeve 67' permits the insertion of the rod-like tether attachment retaining elements 48' through either a ring element 32' (FIG. 7) or a loop at the end of tethered restraints 30'. According to a potentially preferred practice, the other end of such tethered restraints will preferably be securely attached to the surface of the air bag cushion 20' at a seam between the main panel and the side panels of the air bag cushion 20' so as to provide substantially even load distribution to the panels of the air bag cushion 20'.

As best illustrated through simultaneous reference to FIGS. 5, 7 and 8, in the event that an extended profile bag deployment is desired, a signal is sent via an onboard computer or other appropriate device to an initiator 60' so as to move the plunger element 50' and thereby also move the vent blocking element 85' including the slide portion 87' and the rod-like tether attachment retaining elements 48' in a substantially linear manner along track elements 88' extending substantially parallel to the length of the inflator 40'. Such linear movement thereby causes the tether attachment retaining elements 48' to slip out of engagement with the tethered restraints 30'. This release frees the tethered restraints to extend to their full operative length as the air bag cushion 20' is inflated. As shown, a mooring strap 35' continues to attach the tethered restraints 30' to the housing 42' via a retaining rod insert assembly 71' which also serves to hold the air bag cushion 20' in place in a manner as is well known to those of skill in the art. Such retention provides a continued degree of control over the final expanded profile of the air bag cushion 20' even with the deep profile deployment.

It is contemplated that the use of the variable profile air bag according to the present invention will permit a single cushion to be utilized to effectively protect a wide range of occupants by having the air bag conform to the requirements of such occupants. In particular, it is contemplated that it will be possible to avoid substantial divergence between the forces to which occupants of different physical dimensions may be subjected during interaction with the air bag.

While measurements relating to the position and/or size of the occupant to be protected may be used to determine whether or not to release the profile restraining tether elements it is likewise contemplated that other factors may also be utilized. By way of example only, it is contemplated that the velocity of the vehicle 10 may be used as an overriding factor in the determination as to whether or not an enhanced profile is desired. In particular, it is contemplated that minimum velocity thresholds may be preprogrammed into the on-board computer or other control device as may be utilized such that enhanced profile will not be obtained if the vehicle is traveling at a very low velocity.

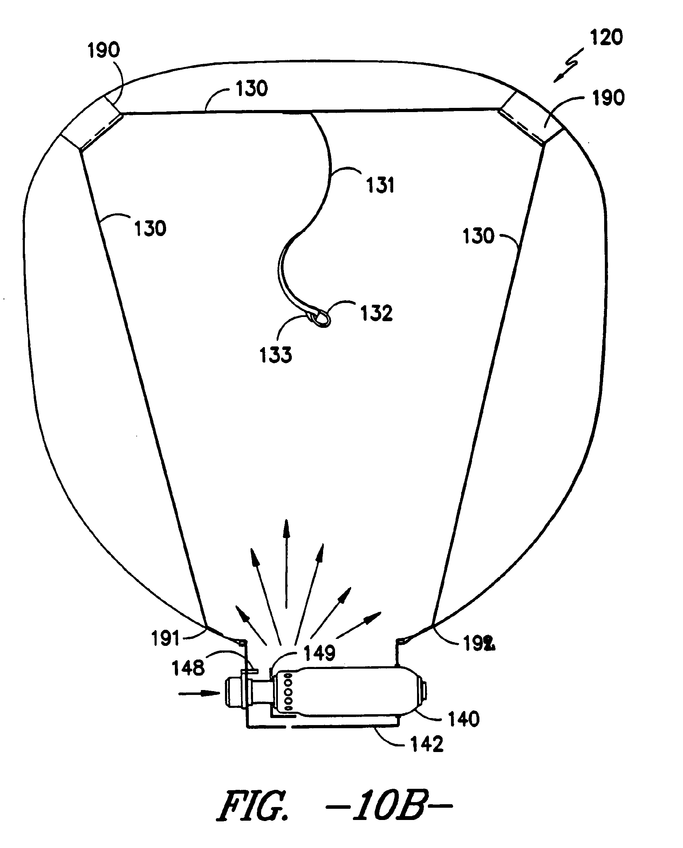

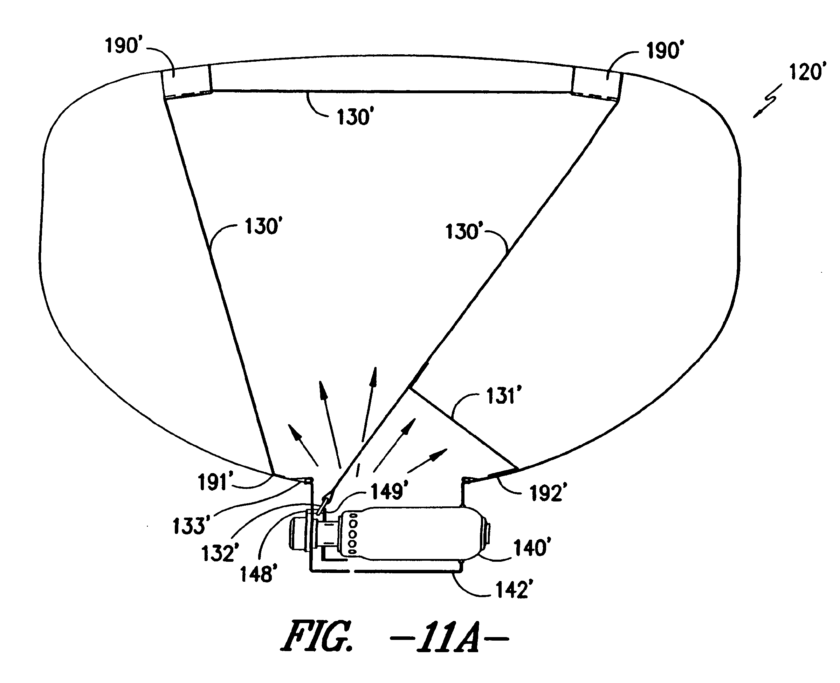

Looking to FIGS. 9, 10A and 10B, yet another alternative embodiment is illustrated. As shown, in this embodiment the tethered restraint 130 (FIG. 10A) may be attached to an anchor strap 131. The anchor strap 131 is preferably formed into a loop 133 which is optionally held within a ring element 132. As shown, in the event that a ring element is utilized, the attachment between the ring element 132 and the anchor strap 131 may be attained by passing the anchor strap through the opening at the interior of the ring element 132 so as to form the loop 133 which can slide along the length of the ring element 132. The configuration of the loop 133 is thereafter maintained by attaching the overlapping portions of anchor strap 131 to one another along a length remote from the loop 133. The joiner between portions of the anchor strap 131 to maintain the looped configuration may be by any suitable joining technique as may be known to those of skill in the art including, by way of example only, the application of a sewn seam 134 as may be applied using industrial sewing equipment. Other modes of attachment may include adhesive bonding, ultrasonic welding, RF welding, and combinations thereof. As will be appreciated, while the use of an anchoring strap 131 may be desirable in some instances to connect the tethered restraints 130 to a releasable anchor point, it is likewise contemplated that such an anchor strap may be eliminated if desired in which instance the tethered restraints may be attached directly to the releasable anchor.

The material forming the tethered restraints 130 and the anchor strap 131 is preferably of pliable nature such as a woven or knitted textile of construction resistant to substantial elongation upon the application of tensile forces. A woven structure of nylon yarns may be preferred.

In the event that a ring element 132 is utilized, it is preferably formed from a smooth surface material of high strength such as metal or the like. Such materials have the ability to withstand substantial loading without undergoing plastic deformation. As will be discussed further hereinafter, the ring element 132 may pass in sliding relation over a stationary retaining member which extends through the opening in the ring element 132 such that the ring element 132 may be pulled away from the retaining member when tension is applied to the anchor strap 131. In the event that a ring element 132 is not utilized, it is contemplated that this function may be carried out by the loop 133 which may likewise accept the retaining member therein. Thus, it is to be appreciated that the use of the ring element 132 is in no way considered to be critical to the performance of the present invention. Moreover, while the illustrated and potentialy preferred embodiment utilizes a female member such as the ring element 132 or loop 133 disposed in sliding relation over a male retaining member, it is likewise contemplated that such female elements may be substituted with a male element for disposition in sliding relation within a supporting female retaining member if desired.

As best seen in FIG. 9, according to one embodiment of the present invention, an actuation mechanism 136 including a support structure 138 is operatively connected to a gas emitting inflator 140 which is activated by an initiator 141 such as a pyrotechnic squib or other suitable device as will be well known to those of skill in the art. The gas emitting inflator 140 is stored within a housing 142 which may include one or more vent openings 143 for transmission of inflator gas outwardly from the module away from the air bag 120. As illustrated, such vent openings 143 are normally in fluid communication with gas discharge ports 144 generally surrounding the diffuser portion 145 of the inflator 140. As will be appreciated, while the support structure 138 of the actuation mechanism 136 is illustrated as being connected to the gas emitting inflator 140, it is likewise contemplated that any number of other arrangements may also be utilized. By way of example only, it is contemplated that the actuation mechanism 136 may be located remote from the inflator 140 and attached directly to the housing 142.

According to the illustrated embodiment, the ring element 132 or loop 133 on the anchor strap 131 is disposed in sliding relation over a restraining stud 148 which is secured in substantially stable relation to the housing 142. The restraining stud 148 is disposed in butting or notched relation to a tether blocking element 149 such as a plate or notched post. As will be appreciated, in such an arrangement the ring element 132 or loop 133 will be anchored in place with the restraining stud 148 and tether blocking element 149 preventing the withdrawal of the ring element 132 or loop 133 thereby holding the anchor strap 131 in place. The tethered restraints 130 which are fixedly attached to the anchor strap 131 will likewise be anchored against outward movement as best seen in FIG. 10A. Accordingly, the expanded profile of the air bag 120 is limited due to the anchored relation between the anchor strap 131 and the stationary restraining stud 148.

According to the illustrated embodiment, the tether blocking element 149 is carried within a plunger element 150 which is held within the interior of the support structure 138 at the end of the inflator 140. The support structure 138 preferably has a substantially hollow tubular shape including interior walls 139 defining an axial opening into which the plunger element 150 and an initiator device 160 may be inserted during assembly.

The support structure 138 preferably includes a first support end 170 of a substantially flanged configuration that is secured directly to the head portion of the inflator 140. The first support end 170 of the support structure 138 may be secured to the inflator 140 by any suitable method, such as welding. The support structure 138 also preferably includes a spacing shoulder 174 which is sized larger than an end opening in the housing 142 such that the support structure 138 is limited from going through the end opening within the housing 142 and is properly positioned during assembly. The spacing shoulder 174 is preferably integrally formed with the support structure 138 such as by machining or molding but may also be provided as a separate piece attached to or slipped over the support structure 138. In the installed condition, the spacing shoulder 174 preferably abuts an end wall of the housing 142.

According to the illustrated embodiment, the support structure 138 is externally attached to the inflator 140 and may be provided as an assembly with the inflator 140 or may alternatively be integrally formed with the inflator 140. The support structure 138 preferably includes a first guide channel 176 which extends longitudinally along at least a portion of the distance between the spacing shoulder 174 and the first support end 170 of the support structure 138 such that the tether blocking element 149 passes through the first guide channel 176 and into the plunger element 150 as shown. The support structure 138 further preferably includes a threaded end portion 178 which extends past the spacing shoulder 174 through the end opening of the housing 142 for mating with a cap nut 180 to secure the inflator 140 and the actuation mechanism 136 to the housing 142.

The plunger element 150 is preferably integrally formed from a plastic material and has a generally cylindrical shape. The plunger element 150 is preferably seated within the interior walls 139 of the support structure 138 and has a diameter which is slightly smaller than the axial opening between the interior walls 139 such that the plunger element 150 is slidable relative to the interior walls 139. The plunger element 150 includes at least a first radial opening which is sized for the receipt of the tether blocking element 149. The plunger element 150 may also include a second radial plunger hole for the receipt of a moveable vent blocking device 185. However, it is also contemplated that the actuation mechanism 136 or such other mechanism as may be used to regulate the expanded configuration of the air bag 120 may be operated without such a moveable vent blocking element 185 if desired. The elements received within the linear plunger element 150 may be secured in place by snap-fitted attachment, although it will be appreciated that other methods of attachment including by way of example only crimping, fastening, or adhesion may also be utilized to obtain secure attachment.

As shown, the plunger element 150 includes a shear feature 152 which is illustrated as a flange located at the end of the plunger element 150. The shear feature 152 is preferably integrally formed with the plunger element 150, but may also be a separate piece attached to the plunger element 150. The shear feature 152 is sized larger than the axial opening within the support structure 138 such that the shear feature 152 engages the support structure 138 during insertion to limit the insertion of the plunger element 150 into the support structure 138.

The plunger element 150 preferably includes an axial plunger bore 154 in which the initiator device 160 such as a pyrotechnic squib, pneumatic actuator or the like is seated prior to activation. The initiator device 160 preferably is activated in response to a signal from a control device such as an on-board computer (not shown) based upon inputs from the seat position sensor 22, optical scanner 24 and any other sensor as may be used to measure the nature of the occupant and the severity of the event taking place. Upon activation, the initiator device 160 produces a pressure wave that presses against a plunger reaction surface 157. The application of such force causes the shear feature 152 to break off and permits the plunger element 150 to slide within the support structure 138 until engaging the head of the inflator 140 which acts as a stop surface.

In the event that a vent blocking element 185 is to be utilized in conjunction with the actuation mechanism 136, the vent blocking element 185 will preferably include an upwardly projecting arm portion 186 which may be snap fittedly attached in the plunger element 150. The vent blocking element 185 will also preferably include a slide portion 187 extending at generally a right angle to the arm portion 186. Thus, in the illustrated embodiment wherein the vent blocking element 185 is to be utilized, the restraining stud 148, tether blocking element 149, and vent blocking element 185 are arranged in a substantially "Z" shaped cross sectional profile.

The slide portion 187 preferably has a generally curved shape such that allows the insertion into the housing 142 through round end wall openings during the assembly process. The vent blocking element 185 is preferably moveable within a second guide channel 177 within the support structure 138 so as to close an inflator vent opening 143 upon activation of the initiator device 160. In FIG. 9, the slide portion 187 is shown in a first position in solid lines in which the inflator vent opening 143 is open thereby lowering the amount of gas available for inflation of the air bag 120 and is illustrated in phantom lines in a second position in which the slide portion 187 is blocking the inflator vent opening 143 within the housing 142 thereby directing a larger quantity of available inflator gas into the air bag 120.

Prior to activation of the inflator 140 the air bag 120 is stored in a folded condition atop the inflator 140. Also, prior to activation of the inflator 140, the tether blocking element 149 as well as the optional vent blocking element 85 are held in a first position by the shear feature 52 such that the restraining stud 148 and tether blocking element 149 hold the anchor strap 131 in place. In addition, the slide portion 187 of the vent blocking element 185 is misaligned with the inflator vent opening 143 such that the inflator vent opening 143 is open thereby permitting the egress of inflator gas outwardly from the housing 142.

Upon sensing predetermined vehicle and occupant conditions, a signal is sent to the inflator initiator 141 thereby activating the inflator 140. Based upon the measurement of occupant conditions including the position and/or physical character of the occupant 14 as measured by the seat position sensor 22, optical scanner 24 and other sensors as may be utilized, a signal is also sent to the initiator device 160 advising the initiator device 160 as to whether the first position is to be maintained or whether the initiator device 160 is to be activated at a predetermined time during activation of the inflator 140 to move the tether blocking element 149 thereby permitting the anchor strap 131 to slide away from the restraining stud 148. According to the potentially preferred arrangement, the initiator device 160 will be activated when conditions indicate that an air bag of deeper profile and larger volume is required and will remain in a deactivated state when conditions indicate that an air bag of more shallow profile and lower volume is desirable.

As previously indicated, upon activation the initiator device 160 produces a pressure wave which presses against the reaction surface 157 of the plunger element 150 and quickly forces the plunger element 150 towards the head portion of the inflator 140. This movement carries the tether blocking element 149 as well as any optional vent blocking element 185 within the plunger element 150 from the first position illustrated in Fig. 2 to a second position wherein the plunger element 150 is in contact with the head portion of the inflator 40. Such movement rapidly opens a path of egress for the ring element 132 or loop 133 disposed over the restraining stud 148 thereby permitting the ring element 132 or loop 133 to slide out of engagement with the restraining stud 148 as tension is applied to the anchor strap 131. This tension arises due to the outward expansion of the air bag 120 as it is filled with inflator gas. Preferably such tension will include both a horizontal as well as a vertical force component arising from the angled relation between the anchor strap 131 and the restraining stud 148 so as to promote sliding disengagement from the restraining stud 148 (FIG. 10A). Simultaneously with such disengagement, the vent blocking element 185 covers the vent opening 143 thereby increasing the quantity of inflation gas available to inflate the air bag 120.

In FIG. 10A the air bag 120 of FIG. 9 is illustrated in an inflated restrained condition wherein an arrangement of tether elements 130 is held in a shortened configuration at the restraining stud 148. As shown, according to the illustrated arrangement the tether elements 130 are formed from a length of material which preferably passes in sliding relation through loop structures 190 at the surface of the air bag cushion 120. In addition, the tether elements 130 are preferably fixedly attached at their ends to secure points of attachment 191, 192 which may be either internal or external to the air bag 120. Attachment using sewn seams at the interior of the air bag 120 may be preferred although other means of attachment as are known to those of skill in the art may also be used.

According to the illustrated embodiment, the portion of the tether elements 130 between the loop structures 190 is drawn down to the restraining stud 148 either directly or via the anchor strap 131 and held in a shortened condition by the restraining stud 148. This drawing operation is made possible by the sliding relation between the tether elements 130 and the loop structures 190 at the surface of the air bag 120. As will be appreciated, as the tether elements 130 are pulled towards the restraining stud 148 the effective length of the tether elements is diminished thereby diminishing the available depth of the air bag 120. However, the air bag 120 is nonetheless capable of outward expansion to the degree permitted by the remaining length extending through the loop structures 190 between the secure points of attachment 191. While only a single length of tether material extending through two loop structures is illustrated, it is likewise contemplated that additional lengths of tether forming material extending through additional loops may also be utilized to obtain expansion characteristics as may be desired.

As illustrated in FIG. 10B, upon release of the tether elements 130 from restraint at the restraining stud 148 in the manner as described above, the air bag 120 expands outwardly to an extended profile as the tether elements slide through the loop structures 190. However, according to the potentially preferred arrangement, the extended profile is nonetheless restrained to some degree by the secure attachment of the ends of the tether elements 130 at the secure points of attachment 191. The maintenance of such a tethering relationship permits the air bag 120 to adopt a generally deep elongated profile as shown without requiring the actual volumetric capacity to be substantially increased. The actual increase in such volumetric capacity is contemplated to be in the range of about 25% or less and may be in the range of about 15% or less.

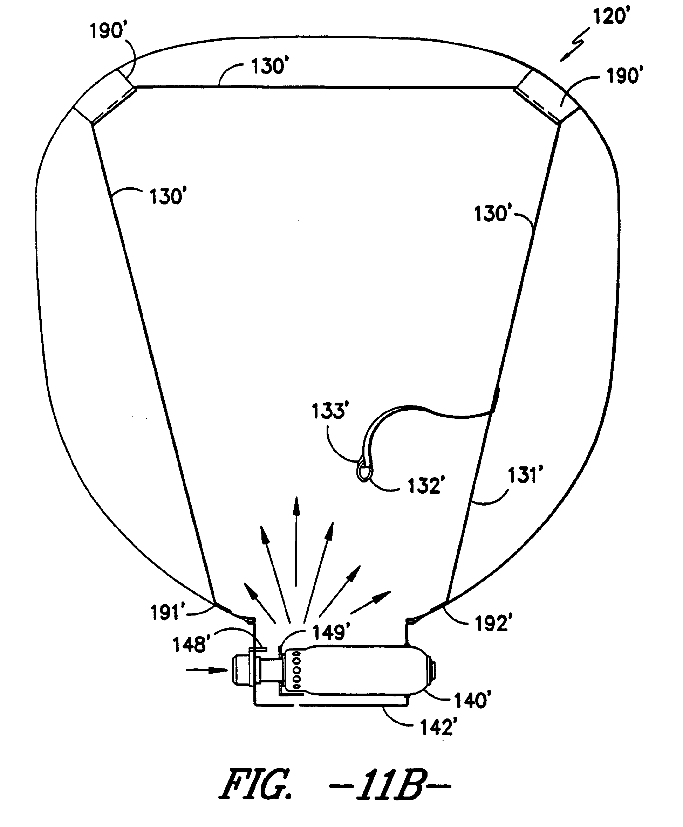

In FIG. 11A there is illustrated another variable profile air bag arrangement wherein elements are designated by like reference numerals to those used in FIGS. 10A and 10B but with a prime. As shown, according to this embodiment, a length of material forming the tether element 130' is preferably passed in sliding relation through two loop structures 190' such as sewn loops of textile material on the surface of the air bag 120'. One end of the tethering element 130' is held in place at a point of secure connection 191' which may be either internal or external to the air bag 120'. The other end of the tethering element 130' is held in place by the ring element 132' or formed loop 133' at the restraining stud 148' between the end wall of the housing 142' and the tether blocking element 149'. As illustrated, such an arrangement gives rise to an increased horizontal force component when tension is applied by the expansion of the air bag 120'. An anchor strap 131' joins the section of the tethering element 130' adjacent to the connection with the retaining stud 148' to a point of secure connection 192'. As will be appreciated, it is contemplated that the relative position of the loop structures 190' and the points of secure connection 191' and 192' may be reversed if desired.

As illustrated in FIG. 11B, upon release of the tether element 130' from the restraining stud 148' in the manner as described above, the air bag 120' expands outwardly to an extended profile. However, according to the potentially preferred arrangement, the extended profile is nonetheless restrained by the secure attachment of the tether element 130' and the anchor strap 131' at their respective secure points of attachment 191', 192'. The maintenance of such a tethering relationship permits the air bag 120' to adopt a generally deep elongated profile as shown without requiring the actual volumetric capacity to be substantially increased. The actual increase in such volumetric capacity is contemplated to be in the range of about 25% or less and may be in the range of about 15% or less.

As will be appreciated, the enhanced angled relation of the tether element 130' with respect to the restraining stud 148' enhances the horizontal component of the force vector extending along the tether element 130' when the tether element 130' is placed into tension as the air bag 120' is deployed. This enhanced horizontal force component is believed to aid in the sliding disengagement of the tether element 130' away from the restraining stud 148'. In addition, the use of the restraining strap 131' provides additional control over the tether element 130' and any ring element 132' as may be utilized. While only a single length of tether material extending through two loop structures is illustrated, it is likewise contemplated that additional lengths of tether forming material extending through additional loops may also be utilized to obtain expansion characteristics as may be desired.

It is contemplated that the use of the variable profile air bag according to the present invention will permit a single cushion to be utilized to effectively protect a wide range of occupants by having the air bag conform to the requirements of such occupants. In particular, it is contemplated that it will be possible to avoid substantial divergence between the forces to which occupants of different physical dimensions may be subjected during interaction with the air bag.

As indicated previously, while measurements relating to the position and/or size of the occupant to be protected may be used to determine whether or not to release the profile restraining tether elements during an impact event of given severity, it is likewise contemplated that other factors may also be utilized. By way of example only, it is contemplated that the velocity of the vehicle 110 may be used as an overriding factor in the determination as to whether or not an enhanced profile is desired. In particular, it is contemplated that minimum velocity thresholds may be preprogrammed into the on-board computer or other control device as may be utilized such that enhanced profile will not be obtained if the vehicle is traveling at a very low velocity which is likely to give rise to a collision of low severity.

It is to be understood that while the present invention has been illustrated and described in relation to potentially preferred embodiments, constructions, and procedures, that such embodiments, constructions, and procedures are illustrative only and that the present invention is in no event to be limited thereto. Rather, it is contemplated that modifications and variations embodying the principles of the present invention will no doubt occur to those of skill in the art. It is therefore contemplated and intended that the present invention shall cover all modifications and variations which fall under the scope of the invention solely defined by the appended claims.

## Claims

1. An air bag assembly for cushioning restraint of an occupant (14) in a vehicle (10) during an impact event, the air bag assembly comprising:
an inflator (40) activatable to discharge inflation gas upon the occurrence of predetermined vehicle conditions;
an air bag cushion (20) in fluid communication with the inflator (40) such that upon discharge of inflation gas from the inflator (40) the air bag cushion (20) is inflated to a deployed state from a location of deployment in substantially opposing relation to the occupant (14);
a releasable anchor structure (37, 48);
a tether (30, 35) comprising at least one profile restraining tether element, the tether (30, 35) being adapted to attach to the releasable anchor structure (37, 48) so as to shorten the operative length of the tether (30, 35); and
an actuation mechanism (36) activatable based upon measurements from one or more sensors (22, 24, 26, 27) measuring conditions of the occupant (14) during activation of the inflator (40), the actuation mechanism (36) being adapted to release the tether (30, 35) from the releasable anchor structure (37, 48) upon the occurance of predetermined occupant conditions thereby extending the operative length of the tether (30, 35) and the operative profile of the air bag cushion (20);
**characterised in that** the tether (30, 35) extends from at least one location on the air bag cushion (20) to at least one point of secure attachment, so that on release of the tether (30, 35) from the releasable anchor structure (37, 48), a tethering relationship is maintained through the attachment of the tether (30, 35) at the point of secure attachment.

2. An air bag assembly according to claim 1, wherein the releasable anchor structure (37, 48) comprises a retaining pin (48) extending along the length of the inflator (40).

3. An air bag assembly according to claim 2, wherein the profile restraining tether element (130; 130') extends from fixed points of connection (191; 191') on the air bag cushion (20; 120; 120') through one or more loop elements (190; 190') at the interior surface of the air bag cushion (20; 120; 120') and the tether (30, 35; 130; 130') is attachable to the releasable anchor structure (37, 48; 148; 148') by a female element (32; 132; 132') that extends in sliding relation over the retaining pin (48; 148; 148').

4. An air bag assembly according to claim 3, wherein the female element is a ring (32; 132; 132').

5. An air bag assembly according to claim 3, wherein the female element is a loop (133) formed in a strap of the tether (130, 131').

6. An air bag assembly according to any of claims 2 to 5, wherein the retaining pin (48) is moveable between a first position in which the releasable anchor structure retains the tether and a second position, in which the releaseable anchor structure releases the tether (30, 35).

7. An air bag assembly according to any of claims 2 to 5, wherein the retaining pin (148) is stationary and the releasable anchor structure further comprises a tether blocking member (149) that is moveable between a first position in which the releasable anchor structure retains the tether (130, 131) and a second position, in which the releaseable anchor structure releases the tether (130, 131).

8. An air bag assembly according to any preceding claim, wherein the actuation mechanism (36) comprises a moveable plunger (50) and a pyrotechnic initiator (60) activatable during activation of the inflator (40).

9. An air bag assembly according to claim 8, wherein the moveable plunger (50) is operatively connected to the releasable anchor structure (37, 48) such that upon activation of the initiator (60), the initiator (60) generates pressure against the plunger (50) to move the plunger (50) away from the initiator (60) to release the tether (30, 35) from the releasable anchor structure (37, 48).

10. An air bag assembly according to claim 9 when claim 8 is dependent on claim 6, wherein the moveable plunger (50) is operatively connected to the moveable retaining pin (48) so that movement of the plunger (50) moves the moveable retaining pin (48) to release the tether (30, 35).

11. An air bag assembly according to claim 9 when claim 8 is dependent on claim 7, wherein the moveable plunger (150) is operatively connected to the tether blocking member (149), so that movement of the plunger (150) moves the tether blocking member (149) to release the tether (130).

12. An air bag assembly according to any preceding claim, further comprising an actuatable device (85) which varies the inflation to control the amount of inflation gas discharged from the inflator (40) into the air bag cushion (20).

13. An air bag assembly according to claim 12 when dependent on claim 9, wherein the actuatable device (85) which varies the inflation is actuated in conjunction with the release of the tether (30, 35) by means of the pyrotechnic initiator (60).

14. An air bag assembly according to claim 12 or claim 13, wherein the actuatable device (85) which varies the inflation is operatively connected to a vent blocking member (87) alignable with a vent opening (43) within a housing (42) in which the inflator (40) is disposed, such that on activation of the actuatable device (85), the vent blocking member (87) moves to at least partially cover the vent opening (43) in the housing (42), thereby directing additional inflation gas into the air bag cushion (20).

15. An air bag assembly according to any preceding claim, wherein the one or more sensors (22, 24, 26, 27) measuring the position of the occupant (14) comprises an optical scanner.

16. An air bag assembly according to any preceding claim, wherein the one or more sensors (22, 24, 26, 27) measuring the position of the occupant (14) comprises a position sensor within a seat (12) for occupation by the occupant (14).

17. An air bag assembly according to any preceding claim, wherein the release of the tether (30, 35) from the anchor structure (37, 48) allows the air bag cushion (20) to be inflated to a greater depth.

18. An air bag assembly according to any preceding claim, wherein the location on the air bag cushion (120) from which the tether (130, 131) extends is at least one point of secure attachment of the tether (130, 131) internal to the air bag cushion (120).

19. An air bag assembly according to any of claims 1 to 17 provided that they are not based directly or indirectly on claim 3, wherein the location on the air bag cushion (120) from which the tether (30', 35') extends is a point of secure attachment (71') of the tether (30', 35') that is external to the air bag cushion (20').

20. An air bag assembly according to claims 7 or 11, wherein the tether (130, 131) extends from two fixed points of secure attachment (191, 192) on the air bag cushion (120).

21. An air bag assembly according to claim 20, wherein the tether (130, 131) extends through one or more loop elements (190) on the interior surface of the air bag cushion (120).

22. An air bag assembly according to claim 21, wherein the tether (130, 131) passes in sliding relation through the one or more loop elements (190).

23. An air bag assembly according to claims 7 or 11, wherein the tether (130, 131) extends in angled relation away from the retaining member (148) such that upon release of the tether (130, 131) the application of tension to the tether (130, 131) causes the tether (130, 131) to slidingly disengage from the retaining member (148).

## Patentansprüche

1. Airbaganordnung zum dämpfenden Zurückhalten eines Insassen (14) in einem Fahrzeug (10) während eines Aufprallereignisses, wobei die Airbaganordnung umfasst:
einen Gasgenerator (40), der aktivierbar ist, um beim Auftreten vorbestimmter Fahrzeugzustände Aufblasgas auszutragen;
ein Airbagkissen (20) in Fluidverbindung mit dem Gasgenerator (40), sodass beim Austrag von Aufblasgas aus dem Gasgenerator (40) das Airbagkissen (20) von einer Stelle einer Entfaltung in einer im Wesentlichen entgegengesetzten Beziehung zu dem Insassen (14) in einen entfalteten Zustand aufgeblasen wird;
eine lösbare Verankerungsstruktur (37, 48);
einen Haltegurt (30, 35) mit zumindest einem Profilrückhalte-Haltegurtelement, wobei der Haltegurt (30, 35) dazu geeignet ist, an der lösbaren Verankerungsstruktur (37, 48) befestigt zu werden, um so die wirksame Länge des Haltegurts (30, 35) zu verkürzen; und
einen Betätigungsmechanismus (36), der auf der Basis von Messungen von einem oder mehreren Sensor/en (22, 24, 26, 27), der/die Zustände des Insassen (14) während einer Aktivierung des Gasgenerators (40) misst/messen, aktivierbar ist, wobei der Betätigungsmechanismus (36) geeignet ist, um den Haltegurt (30, 35) beim Auftreten von vorbestimmten Insassenzuständen von der lösbaren Verankerungsstruktur (37, 48) freizugeben und dadurch die wirksame Länge des Haltegurts (30, 35) und das wirksame Profil des Airbagkissens (20) zu erweitern;
**dadurch gekennzeichnet, dass**
der Haltegurt (30, 35) sich von zumindest einer Stelle an dem Airbagkissen (20) bis zu zumindest einem Punkt einer sicheren Befestigung erstreckt, sodass bei Freigabe des Haltegurts (30, 35) von der lösbaren Verankerungsstruktur (37, 48) eine Anbindungsbeziehung durch die Befestigung des Haltegurts (30, 35) an dem Punkt einer sicheren Befestigung beibehalten wird.

2. Airbaganordnung nach Anspruch 1, wobei die lösbare Verankerungsstruktur (37, 48) einen Haltestift (48) umfasst, der sich entlang der Länge des Gasgenerators (40) erstreckt.

3. Airbaganordnung nach Anspruch 2, wobei das Profilrückhalte-Haltegurtelement (130, 130') sich von festen Punkten einer Verbindung (191, 191') an dem Airbagkissen (20, 120, 120') durch ein oder mehrere Schleifenelemente (190, 190') an der Innenfläche des Airbagkissens (20, 120, 120') hindurch erstreckt und der Haltegurt (30, 35, 130, 130') durch ein Buchsenelement (32, 132, 132'), das sich in einer Gleitbeziehung über den Haltestift (48, 148, 148') erstreckt, an der lösbaren Verankerungsstruktur (37, 48, 148, 148') befestigbar ist.

4. Airbaganordnung nach Anspruch 3, wobei das Buchsenelement ein Ring (32, 132, 132') ist.

5. Airbaganordnung nach Anspruch 3, wobei das Buchsenelement eine Schleife (133) ist, die in einem Band des Haltegurts (130, 131') gebildet ist.

6. Airbaganordnung nach einem der Ansprüche 2 bis 5, wobei der Haltestift (48) zwischen einer ersten Position, in der die lösbare Verankerungsstruktur den Haltegurt zurückhält, und einer zweiten Position, in der die lösbare Verankerungsstruktur den Haltegurt (30, 35) freigibt, bewegbar ist.

7. Airbaganordnung nach einem der Ansprüche 2 bis 5, wobei der Haltestift (148) feststehend ist und die lösbare Verankerungsstruktur ferner ein Haltegurt-Sperrelement (149) umfasst, das zwischen einer ersten Position, in der die lösbare Verankerungsstruktur den Haltegurt (130, 131) zurückhält, und einer zweiten Position, in der die lösbare Verankerungsstruktur den Haltegurt (130, 131) freigibt, bewegbar ist.

8. Airbaganordnung nach einem der vorhergehenden Ansprüche, wobei der Betätigungsmechanismus (36) einen beweglichen Kolben (50) und einen pyrotechnischen Zünder (60), der während einer Aktivierung des Gasgenerators (40) aktivierbar ist, umfasst.

9. Airbaganordnung nach Anspruch 8, wobei der bewegliche Kolben (50) funktionell derart mit der lösbaren Verankerungsstruktur (37, 38) verbunden ist, dass bei Aktivierung des Zünders (60) der Zünder (60) einen Druck gegen den Kolben (50) erzeugt, um den Kolben (50) weg von dem Zünder (60) zu bewegen und den Haltegurt (30, 35) von der lösbaren Verankerungsstruktur (37, 48) freizugeben.

10. Airbaganordnung nach Anspruch 9, wenn Anspruch 8 von Anspruch 6 abhängig ist, wobei der bewegliche Kolben (50) funktionell derart mit dem bewegbaren Haltestift (48) verbunden ist, dass eine Bewegung des Kolbens (50) den bewegbaren Haltestift (48) bewegt, um den Haltegurt (30, 35) freizugeben.

11. Airbaganordnung nach Anspruch 9, wenn Anspruch 8 von Anspruch 7 abhängig ist, wobei der bewegliche Kolben (150) funktionell derart mit dem Haltegurt-Sperrelement (149) verbunden ist, dass eine Bewegung des Kolbens (150) das Haltegurt-Sperrelement (149) bewegt, um den Haltegurt (130) freizugeben.

12. Airbaganordnung nach einem der vorhergehenden Ansprüche, ferner umfassend eine betätigbare Vorrichtung (85), die das Aufblasen verändert, um die Menge von Aufblasgas, das von dem Gasgenerator (40) in das Airbagkissen (20) ausgetragen wird, zu steuern.

13. Airbaganordnung nach Anspruch 12, wenn er von Anspruch 9 abhängig ist, wobei die betätigbare Vorrichtung (85), die das Aufblasen verändert, in Verbindung mit dem Freigeben des Haltegurts (30, 35) mit Hilfe des pyrotechnischen Zünders (60) betätigt wird.

14. Airbaganordnung nach Anspruch 12 oder 13, wobei die betätigbare Vorrichtung (85), die das Aufblasen verändert, wirksam mit einem Entlüftungssperrelement (87) verbunden ist, das mit einer Entlüftungsöffnung (43) innerhalb eines Gehäuses (42), in dem der Gasgenerator (40) angeordnet ist, ausrichtbar ist, sodass sich das Entlüftungssperrelement (87) bei Aktivierung der betätigbaren Vorrichtung (85) bewegt, um zumindest teilweise die Entlüftungsöffnung (43) in dem Gehäuse (42) abzudecken und dadurch zusätzliches Aufblasgas in das Airbagkissen zu leiten.

15. Airbaganordnung nach einem der vorhergehenden Ansprüche, wobei der eine oder die mehreren Sensor/en (22, 24, 26, 27), der/die die Position des Insassen (14) misst/messen, einen optischen Abtaster umfasst/en.

16. Airbaganordnung nach einem der vorhergehenden Ansprüche, wobei der eine oder die mehreren Sensor/en (22, 24, 26, 27), der/die die Position des Insassen (14) misst/messen, einen Positionssensor innerhalb eines Sitzes (12) zum Einnehmen durch den Insassen (14) umfasst/en.

17. Airbaganordnung nach einem der vorhergehenden Ansprüche, wobei die Freigabe des Haltegurts (30, 35) von der Verankerungsstruktur (37, 48) zulässt, dass das Airbagkissen (20) zu einer größeren Tiefe aufgeblasen wird.

18. Airbaganordnung nach einem der vorhergehenden Ansprüche, wobei die Stelle an dem Airbagkissen (120), von der sich der Haltegurt (130, 131) weg erstreckt, zumindest ein Punkt einer sicheren Befestigung des Haltegurts (130, 131) innen an dem Airbagkissen (120) ist.

19. Airbaganordnung nach einem der Ansprüche 1 bis 17, vorausgesetzt, sie basieren nicht direkt oder indirekt auf Anspruch 3, wobei die Stelle an dem Airbagkissen (120), von der sich der Haltegurt (30, 35') weg erstreckt, ein Punkt einer sicheren Befestigung (71') des Haltegurts (30, 35) außen an dem Airbagkissen (20') ist.

20. Airbaganordnung nach Anspruch 7 oder 11, wobei sich der Haltegurt (130, 131) von zwei festen Punkten einer sicheren Befestigung (191, 192) an dem Airbagkissen (120) weg erstreckt.

21. Airbaganordnung nach Anspruch 20, wobei der Haltegurt (130, 131) sich durch ein oder mehrere Schleifenelemente (190) an der Innenfläche des Airbagkissens (120) hindurch erstreckt.

22. Airbaganordnung nach Anspruch 21, wobei der Haltegurt (130, 131) in einer Gleitbeziehung durch das eine oder die mehreren Schleifenelemente (190) hindurch verläuft.

23. Airbaganordnung nach Anspruch 7 oder 11, wobei der Haltegurt (130, 131) sich in einer abgewinkelten Beziehung von dem Rückhalteelement (148) weg erstreckt, sodass bei Freigabe des Haltegurts (130, 131) das Aufbringen einer Spannung auf den Haltegurt (130, 131) bewirkt, dass der Haltegurt (130, 131) gleitend von dem Rückhalteelement (148) ausrückt.

## Revendications

1. Ensemble de coussin gonflable de sécurité destiné à amortir la retenue d'un occupant (14) dans un véhicule (10) pendant un événement d'impact, l'ensemble de coussin gonflable comprenant :
un gonfleur (40) pouvant être activé pour débiter un gaz de gonflage en réponse à l'occurrence de certaines conditions prédéterminées du véhicule ;
une enveloppe de coussin gonflable de sécurité (20) en communication fluidique avec le gonfleur (40) de telle manière qu'en réponse à la décharge du gaz de gonflage issu du gonfleur (40), l'enveloppe de coussin gonflable (20) se gonfle pour prendre un état déployé à partir d'un site de déploiement dans une position relative qui fait sensiblement face à l'occupant (14) ;
une structure d'ancrage déclenchable (37, 48) ;
un tirant (30, 35) comprenant au moins un élément de tirant qui limite un profil, le tirant (30, 35) étant adapté pour s'attacher à la structure d'ancrage déclenchable (37, 38) de manière à raccourcir la longueur active du tirant (30, 35) ;
et un mécanisme d'actionnement (36) pouvant être activé sur la base de mesures issues d'un ou plusieurs capteurs (22, 24, 26, 27) qui mesurent des conditions de l'occupant (14) pendant l'activation du gonfleur (40), le mécanisme d'actionnement (36) étant adapté pour libérer le tirant (30, 35) de la structure d'ancrage déclenchable (37, 48) en réponse à l'occurrence de certaines conditions prédéterminées de l'occupant, en agrandissant ainsi la longueur active du tirant (30, 35) et le profil actif de l'enveloppe (20) du coussin gonflable ;
**caractérisé en ce que** le tirant (30, 35) s'étend d'au moins un site sur l'enveloppe (20) du coussin gonflable jusqu'à au moins un point d'attache permanent, de sorte que, lorsque le tirant (30, 35) est libéré de la structure d'ancrage déclenchable (37, 48), une relation de liaison reste maintenue grâce à la fixation du tirant (30, 35) au point d'attache permanent.

2. Ensemble de coussin gonflable selon la revendication 1, dans lequel la structure d'ancrage déclenchable (37, 48) comprend une goupille de retenue (48) qui s'étend le long de la longueur du gonfleur (40).

3. Ensemble de coussin gonflable de sécurité selon la revendication 2, dans lequel l'élément de tirant (130 ; 130') qui limite le profil s'étend à partir de points de liaison fixes (191, 191') prévus sur l'enveloppe du coussin gonflable de sécurité (20, 102 ; 120') en traversant un ou plusieurs éléments formant boucles (190 ; 190') prévus à la surface intérieure de l'enveloppe (20 ; 120 ; 120') du coussin de sécurité gonflable, et le tirant (30, 35 ; 130, 130') peut être attaché à la structure d'ancrage déclenchable (37, 48 ; 148 ; 148') par un élément femelle (32 ; 132 ; 132') qui est enfilé sur la goupille de retenue (48 ; 148 ; 148') en pouvant glisser sur cette dernière.

4. Ensemble de coussin gonflable de sécurité selon la revendication 3, dans lequel l'élément femelle est un anneau (32 ; 132 ; 132').

5. Ensemble de coussin gonflable de sécurité selon la revendication 3, dans lequel l'élément femelle est une boucle (133) formée dans une sangle du tirant (130 ; 131').

6. Ensemble de coussin gonflable de sécurité selon une quelconque des revendications 2 à 5, dans lequel la goupille de retenue (48) peut se déplacer entre une première position, dans laquelle la structure d'ancrage déclenchable retient le tirant et une seconde position, dans laquelle la structure d'ancrage déclenchable libère le tirant (30, 35).

7. Ensemble de coussin gonflable de sécurité selon une quelconque des revendications 2 à 5, dans lequel la goupille de retenue (148) est fixe et la structure d'ancrage déclenchable comprend en outre un élément de blocage (149) du tirant qui peut se déplacer entre une première position dans laquelle la structure d'ancrage déclenchable retient le tirant (130, 131) et une seconde position dans laquelle la structure d'ancrage déclenchable libère le tirant (130, 131).

8. Ensemble de coussin gonflable de sécurité selon une quelconque des revendications précédentes, dans lequel le mécanisme d'actionnement (36) comprend un plongeur mobile (50) et une amorce pyrotechnique (60) qui peut être activée pendant l'activation du gonfleur (40).

9. Ensemble de coussin gonflable de sécurité selon la revendication 8, dans lequel le plongeur mobile (50) est relié fonctionnellement à la structure d'ancrage déclenchable (37, 48) de telle manière qu'en réponse à l'activation de l'amorce (60), l'amorce (60) génère une pression contre le plongeur (50) pour éloigner le plongeur (50) de l'amorce (60) afin de libérer le tirant (30, 35) de la structure d'ancrage déclenchable (37, 48).

10. Ensemble de coussin gonflable de sécurité selon la revendication 9, lorsque la revendication 8 est dépendante de la revendication 6, dans lequel le plongeur mobile (50) est relié fonctionnellement à la goupille de retenue mobile (48), de telle manière que le mouvement du plongeur (50) déplace la goupille de retenue mobile (48) pour libérer le tirant (30, 35).

11. Ensemble de coussin gonflable de sécurité selon la revendication 9, lorsque la revendication 8 est dépendante de la revendication 7, dans lequel le plongeur mobile (150) est relié fonctionnellement à l'élément (149) de blocage du tirant, de telle manière que le mouvement du plongeur (150) déplace l'élément (149) de blocage du tirant pour libérer le tirant (130).

12. Ensemble de coussin gonflable de sécurité selon une quelconque des revendications précédentes, comprenant en outre un dispositif actionnable (85) qui fait varier le gonflage pour commander la quantité de gaz de gonflage déchargée depuis le gonfleur (40) dans l'enveloppe (20) du coussin gonflable de sécurité.

13. Ensemble de coussin gonflable de sécurité selon la revendication 12, lorsqu'elle est dépendante de la revendication 9, dans lequel le dispositif actionnable (185) qui fait varier le gonflage est actionné en conjonction avec la libération du tirant (30, 35) exécutée au moyen de l'amorce pyrotechnique (60).

14. Ensemble de coussin gonflable de sécurité selon la revendication 12, ou la revendication 13, dans lequel le dispositif actionnable (85) qui fait varier le gonflage est relié fonctionnellement à un élément (87) de fermeture d'évent qui peut être aligné avec une ouverture d'évent (43) formée dans un boîtier (42) dans lequel le gonfleur (40) est disposé, de sorte qu'en réponse à l'activation du dispositif actionnable (85), l'élément (87) de fermeture d'évent se déplace pour recouvrir au moins partiellement l'ouverture d'évent (43) formée dans le boîtier (42), en envoyant ainsi une quantité additionnelle de gaz de gonflage dans l'enveloppe (20) du coussin gonflable de sécurité.

15. Ensemble de coussin gonflable de sécurité selon une quelconque des revendications précédentes, dans lequel le capteur ou les plusieurs capteurs (22, 24, 26, 27) qui mesurent la position de l'occupant (14) comprend ou comprennent un scanner optique.

16. Ensemble de coussin gonflable de sécurité selon une quelconque des revendications précédentes, dans lequel le capteur ou les plusieurs capteurs (22, 24, 26, 27) qui mesure(nt) la position de l'occupant (14) comprend ou comprennent un capteur de position prévu dans un siège (12) destiné à être occupé par l'occupant (14).

17. Ensemble de coussin gonflable de sécurité selon une quelconque des revendications précédentes, dans lequel la libération du tirant (30, 35) par rapport à la structure d'ancrage (37,48) permet à l'enveloppe (20) du coussin gonflable de sécurité de se gonfler sur une plus grande profondeur.

18. Ensemble de coussin gonflable de sécurité selon une quelconque des revendications précédentes, dans lequel l'endroit de l'enveloppe (120) du coussin gonflable de sécurité d'où part le tirant (130,131) est au moins un point d'attache permanent du tirant (130,131) à l'intérieur de l'enveloppe (120) du coussin gonflable de sécurité.

19. Ensemble de coussin gonflable de sécurité selon une quelconque des revendications 1 à 17, lorsqu'elles ne sont pas basées directement ou indirectement sur la revendication 3, dans lequel l'endroit de l'enveloppe (120) du coussin gonflable de sécurité d'où part le tirant (30', 35') est un point d'attache permanent (71') du tirant (30', 35') qui est extérieur à l'enveloppe (20') du coussin gonflable de sécurité.

20. Ensemble de coussin gonflable de sécurité selon les revendications 7 ou 11, dans lequel le tirant (130, 131) s'étend à partir de deux points fixes d'attache permanents (191, 192) prévus sur l'enveloppe (120) du coussin gonflable de sécurité.

21. Ensemble de coussin gonflable de sécurité selon la revendication 20, dans lequel le tirant (130, 131) passe à travers un ou plusieurs éléments formant boucles (190) prévus sur la surface intérieure de l'enveloppe (12à du coussin gonflable de sécurité.

22. Ensemble de coussin gonflable de sécurité selon la revendication 21, dans lequel le tirant (130, 131) passe en glissant à travers un ou plusieurs éléments formant boucles (190).

23. Ensemble de coussin gonflable de sécurité selon les revendications 7 ou 11, dans lequel le tirant (130, 131) s'étend dans une direction inclinée à partir de l'élément de retenue (148), de sorte que, lors de la libération du tirant (130, 131), l'application d'une tension au tirant (130, 131) a pour effet que le tirant (130, 131) se dégage de l'élément de retenue (148) en glissant.
